# EUROPÄISCHE PATENTSCHRIFT

(11) **EP 1 925 068 B1**
(45) Veröffentlichungstag und Bekanntmachung des Hinweises auf die Patenterteilung: **11.06.2014**
(21) Anmeldenummer: 06762917.0
(22) Anmeldetag: 01.08.2006
(51) Int. Cl.: H02K 11/04

(54) **UMRICHTERMOTOR**
CONVERTER MOTOR
MOTEUR-CONVERTISSEUR

(30) Priorität: 30.08.2005 DE 102005041136
(43) Veröffentlichungstag der Anmeldung: 28.05.2008
(73) Patentinhaber: SEW-EURODRIVE GmbH & Co. KG, 76646 Bruchsal (DE)
(72) Erfinder: MAHLEIN, Jochen, 76139 Karlsruhe (DE); EGGER, Bjoern, 59929 Brilon (DE); SCHMIDT, Josef, 76676 Graben-Neudorf (DE); LEICHTER, Thomas, 76187 Karlsruhe (DE)
(86) Internationale Anmeldenummer: PCT/EP2006/007588
(87) Internationale Veröffentlichungsnummer: WO 2007/025619

(56) Entgegenhaltungen:
- EP-A1- 1 211 784
- EP-A2- 0 951 131
- DE-A1- 4 209 167

## Beschreibung

Die Erfindung betrifft einen Umrichtermotor nach dem Oberbegriff des Anspruchs 1.

Aus der EP 1 211 784 A1 ist als nächstliegender Stand der Technik ein Umrichtermotor bekannt, bei dem das Umrichtergehäuse mit dem Unterteil des Klemmenkastens verbunden ist und dieser flach ausgebildet ist. Das flach ausgebildete unterteil ist auf ein wassergekühltes Motorgehäuse aufgesetzt.

Aus der DE 197 04 226 ist ein Umrichtermotor bekannt, bei dem der Umrichter auf dem Motorgehäuse aufgesetzt ist und eine Wärmesperre zwischen der Leistungselektronik und dem Motor vorgesehen ist. Somit ist die Entwärmung der Leistungselektronik zur Umgebung hin über einen Kühlkörper ermöglicht.

Aus der DE 42 09 167 A1 ist ein Umrichter bekannt, bei dem die wärmeerzeugenden Halbleiterschalter wärmeleitend mit dem Gehäuse des Elektromotors verbunden sind, an dem ein von einem Lüfter angetriebener Kühlluftstrom entlanggeführt wird.

**Aus der** EP 0 951 131 A2 **ist eine elektrische Antriebseinheit aus Elektromotor und Elektronikmodul bekannt.**

Der Erfindung liegt daher die Aufgabe zugrunde, einen Umrichtermotor weiterzubilden, wobei er möglichst kompakt gestaltet sein soll.

Erfindungsgemäß wird die Aufgabe bei dem Umrichtermotor nach den in Anspruch 1 angegebenen Merkmalen gelöst.

Von Vorteil ist dabei, dass der Umrichtermotor kompakter gestaltbar ist, da die Wärme besser an die Umgebung abführbar ist. Insbesondere ist das Motorgehäuse statt eines speziellen Kühlkörpers nutzbar. Zwar würde der Fachmann zuerst davor zurückschrecken, da er annehmen würde, dass der Motor heißer ist als die Leistungselektronik. Jedoch ist die Erfindung vorteilhaft einsetzbar, wenn der Motor zum Bewirken eines Drehmomentes, insbesondere eines zeitlich beschränkt wirksamen großen Drehmomentes, ausgebildet und verwendet ist. Denn bei beispielsweise Positionieraufgaben ist nur kurzzeitig der Motor mit vollem Drehmoment zu betreiben. Danach folgt eine Ruhephase oder eine Teilauslastung des Motors. Wärmetechnisch nutzt die Erfindung nun die ansonsten brach liegenden Wärmeabfuhrmöglichkeit. Wichtig bei der Erfindung ist auch, dass vorteiligerweise die Wärme-Zeitkonstanten des Stators viel größer sind als die der Leistungselektronik. Dies bedeutet, dass die Spitzentemperatur vom Stator langsamer erreicht wird nach Aufnahme der Leistungserzeugung als die Spitzentemperatur der Leistungselektronik, die sehr schnell erreicht wird. Dabei ist auch wichtig, dass die Wärmekapazität der Statorwicklungen und des Statorgehäuses zusammenwirken und somit eine langsame Erhöhung der Temperatur auftritt. Daher stellt sich im Aussetzbetrieb eine mittlere Temperatur ein, um die herum nur geringe Temperaturschwankungen auftreten. Die Temperaturanstieg der Leistungselektronik verläuft dagegen sehr schnell und die Temperaturschwankungen sind groß. Dies erleichtert den Wärmeabtransport an das Statorgehäuse.

Dadurch, daß der Dom von einem Graben umgeben ist, weist die Wandstärke des Gehäuseteils im Bereich des Grabens ein lokales Minimum auf. Also wird die Wärme vorrugsweise in Richtung des Statorgehäuses fließen und weniger Wärme sich im Gehäuseiteil ausbrieten.

Die Wärmesperre hat den Vorteil, dass die Wärmeabfuhr der Signalelektronik möglichst unbeeinflusst von der Temperatur des Statorgehäuses sowie der Leistungselektronik ist. Die Ausnehmung in der Wärmesperre hat den Vorteil, dass das Motorgehäuse zur Wärmeabfuhr von der Leistungselektronik nutzbar ist.

Der Dom ist einfach und kostengünstig erzeugbar, insbesondere bei Druckguss oder Spritzgussherstellung.

Bei einer vorteilhaften Ausgestaltung ist die Wärmesperre auch oder nur an der Innenseite des Unterteils angeordnet. Von Vorteil ist dabei, dass das Einströmen von Wärme in den zwischen Unterteil und Oberteil gebildeten Innenraum begrenzbar ist.

Bei einer vorteilhaften Ausgestaltung weist die Signalelektronik zum Oberteil einen geringeren Wärmeübergangswiderstand auf als zum Unterteil, insbesondere zu mit der Umgebungsluft in Berührung stehenden Oberflächenbereichen des Unterteils. Insbesondere weist die Signalelektronik zum Oberteil einen geringeren Wärmeübergangswiderstand auf als zum Statorgehäuse. Von Vorteil ist dabei, dass die Wärme der Signalelektronik auf einem anderen Weg abgeführt wird als die Wärme der Leistungselektronik und der Statorwicklungen.

Bei einer vorteilhaften Ausgestaltung sind die Signalelektronik und die Leistungselektronik auf derselben Leiterplatte vorgesehen. Von Vorteil ist dabei, dass eine schnelle und einfache Montage ermöglicht ist, insbesondere in einem Arbeitsgang mit Bestücken und einem Lötvorgang.

Bei einer vorteilhaften Ausgestaltung ist die Leistungselektronik zur Wärmeabfuhr mit dem Statorgehäuse wärmeleitend verbunden, entweder direkt oder indirekt über ein Zwischenteil und/oder indirekt über das Unterteil. Von Vorteil ist dabei, dass die Wärme über das Motor Gehäuse an die Umgebung abführbar ist.

Bei einer vorteilhaften Ausgestaltung ist zur Verringerung des Wärmetransportes ins Unterteil, insbesondere zu mit der Umgebungsluft in Berührung stehenden Oberflächenbereichen des Unterteils hin, die Wandstärke des Unterteils in mindestens einem Teilbereich verdünnt ausgeführt. Von Vorteil ist dabei, dass quasi eine Ventilwirkung für Wärmeströme erreichbar ist. Der Wärmestrom wird mit seinem größten Anteil zum Statorgehäuse hingeleitet und dort an die Umgebung abgeführt.

Bei einer vorteilhaften Ausgestaltung ist der Teilbereich um die Kontaktfläche der Leistungselektronik und des Unterteils herum angeordnet. Von Vorteil ist dabei, dass zwar eine mechanische Haltefunktion vom Unterteil ausgeführt wird, aber die Wärme nicht oder nur in geringem Maße in das haltende Teil strömt. Somit ist der Wärmefluss hinlenkbar in Richtung Motorgehäuse. Die Verringerung der Wandstärke rings um den Kontaktbereich herum ist einfach und kostengünstig ausführbar, beispielsweise als Graben.

Bei einer vorteilhaften Ausgestaltung ist das Unterteil und/oder Oberteil aus Aluminium, insbesondere als Aluminium-Druckguss, gefertigt. Von Vorteil ist dabei, dass die Wärmedurchleitung der Wärme der Signalelektronik sehr gut ist.

Bei einer vorteilhaften Ausgestaltung ist das Statorgehäuse aus Stahlguss gefertigt. Von Vorteil ist dabei, dass das Statorgehäuse kostengünstig und mit vorteilhaften magnetischen Eigenschaften realisierbar ist.

Bei einer vorteilhaften Ausgestaltung weist bei Dauerbetrieb mit maximal zulässiger Leistung das Statorgehäuse eine höhere Temperatur auf als die Leistungselektronik, insbesondere wobei dann keine Wärme von der Leistungselektronik über das Statorgehäuse an die Umgebung abführbar ist. Insbesondere ist der Elektromotor, insbesondere zur Ermöglichung der Wärmeabfuhr von der Leistungselektronik ans Statorgehäuse, derart in Teillast oder Aussetzbetrieb betreibbar, dass das Statorgehäuse eine niedrigere Temperatur aufweist als die Leistungselektronik, insbesondere wobei dann Wärme von der Leistungselektronik über das Statorgehäuse an die Umgebung abführbar ist. Von Vorteil ist dabei, dass ein großes Drehmoment aufbringbar ist und trotzdem das auf Dauerleistung optimierte Gehäuse des Motors zur Wärmeabfuhr der Elektronik verwendbar ist.

Darüber hinaus ist das Statorgehäuse oder der gesamte Motor ohne Umrichter in einer Motorenbaureihe verwendbar, deren Motoren auch im Dauerlastbetrieb betreibbar sind. Somit lässt sich die Anzahl der Bauteile einer Baureihe von Motoren, umfassend Drehstrommotoren und Umrichtermotoren, reduzieren bei Erhalt einer großen Varianz.

Beim Betreiben des Umrichtermotors ist vorgesehen, daß der Motor in Teillast oder Aussetzbetrieb derart betrieben wird, dass die Temperatur des Statorgehäuses eine niedrigere Temperatur aufweist als die Leistungselektronik des Umrichters. Von Vorteil ist dabei, dass die bei dem Aussetzbetrieb oder Teillastbetrieb noch zur Verfügung stehende Möglichkeit der Wärmeabfuhr über das Statorgehäuse an die Umgebung genutzt wird.

Insbesondere ist ein Sensor zur Erfassung der Temperatur des Statorgehäuses mit der Signalelektronik elektronisch verbunden. Alternativ wird ein Modellwert für die Temperatur des Statorgehäuses bestimmt, insbesondere als Funktion der Betriebsart, wie Teillast oder Aussetzbetrieb, und bei Überschreitung eines kritischen Wertes einerseits eine Warnung ausgelöst wird, insbesondere per Feldbus an einen Feldbusteilnehmer, und andererseits die Leistung des Motors reduziert wird und/oder die Aussetzlänge im Aussetzbetrieb verlängert wird. Von Vorteil ist dabei, dass eine kritische entweder prognostizierte, geschätzte oder gemessene Temperatur des Statorgehäuses nicht überschritten wird, indem geeignete Maßnahmen ergriffen werden und/oder eine Warnung mitgeteilt wird.

Weitere Vorteile ergeben sich aus den Unteransprüchen.

Die Erfindung wird nun anhand von Abbildungen näher erläutert:

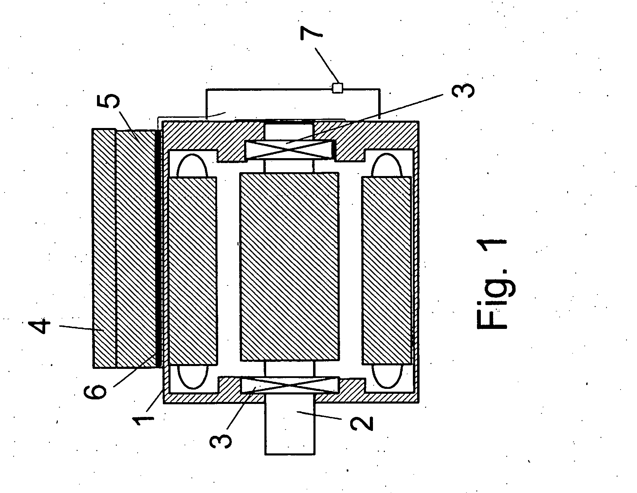

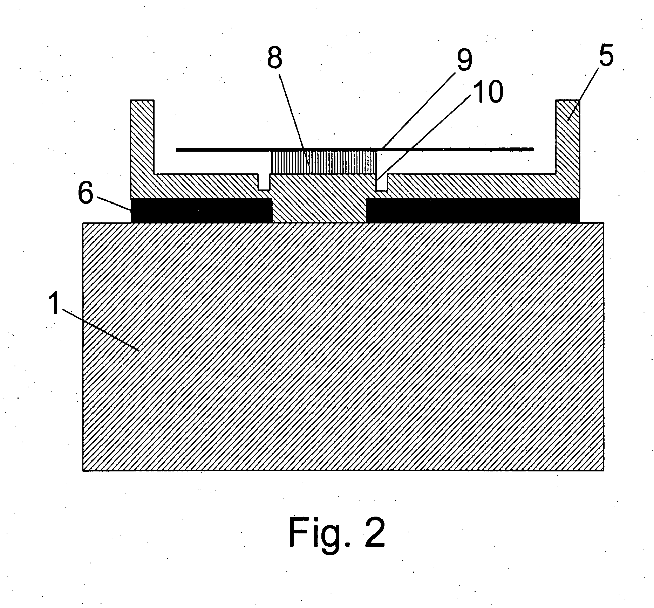

In der Figur 1 ist ein erfindungsgemäßer Umrichtermotor schematisiert in Schnittansicht gezeichnet. In der Figur 2 ist die Anordnung des Leistungshalbleiters und wichtiger wärmeführender Teile ausschnittsweise gezeigt.

Der Rotor 2 ist über Lager 3 im Statorgehäuse 1 gelagert. Der Umrichter ist samt seiner Leistungs- und Signalelektronik auf den Motor aufgesetzt. Dabei ist er von den gehäusebildenden Teilen, nämlich zumindest Gehäusedeckel 4 als Oberteil und Gehäuseteil 5, das den Klemmenkasten des Motors ersetzend ausgeführt ist, als Unterteil umgeben, wodurch sein Gehäuse gebildet ist.

Zwischen Gehäusedeckel 4 und Gehäuseteil 5 ist eine Wärmesperre 6 vorgesehen.

Die Signalelektronik ist auf der Leiterplatte 9 vorgesehen. Das Leistungsmodul 8 umfasst die Leistungselektronik des Umrichters. Das Leistungsmodul ist auf der Leiterplatte 9 vorgesehen.

An einem axialen Endbereich des Motors ist der Anbau eines Gebers 7 ermöglicht. Es ist aber auch eine integrierte Ausführung möglich, beispielsweise in einem axial eintriebsseitig liegenden Lagerschild.

Das Gehäuseteil 5 ist aus Aluminium, beispielsweise als Aluminiumspritzguss gefertigt. Es weist einen Dom, also eine Erhöhung auf, die ins Innere des Umrichters gerichtet vorgesehen ist. Auf dieser Erhebung ist das Leistungsmodul vorsehbar, also in Berührung bringbar bei der Montage. Mittels Wärmeleitpaste zwischen dem Leistungsmodul und dem Gehäuseteil ist der Wärmeübergangswiderstand verringerbar.

Das Gehäuseteil 5 ist in direktem Kontakt mit dem Statorgehäuse 1. Somit ist hier die Wärme gut abführbar in Richtung Motorgehäuse.

Der nach innen gerichtete Dom 10 ist von einem Graben umgeben. Somit weist die Wandstärke des Gehäuseteils 5 im Bereich des Grabens ein lokales Minimum auf. Also wird die Wärme vorzugsweise in Richtung des Statorgehäuses 1 fließen und weniger Wärme sich im Gehäuseteil 5 ausbreiten.

Auf diese Weise ist also nun der hauptsächliche Wärmefluss vom Leistungsmodul über den Dom zum Statorgehäuse 1 und von dort an die Umgebung vorgesehen.

Das Gehäuseteil 5 ist in Bereichen außerhalb des beschriebenen Grabens um den Dom herum mit einer Wärmesperre versehen, die eine gute Wärmetechnische Trennung zum Statorgehäuse bewirkt.

In der Figur 1 und 2 ist das Gehäuseteil 5 relativ zur Größe des Gehäusedeckels 4 groß ausgeführt.

Bei weiteren Ausführungsbeispielen ist der Gehäusedeckel 4 viel größer als das Gehäuseteil 5 ausgeführt. Zwischen Gehäuseteil 5 und Gehäusedeckel 4 ist vorzugsweise ein Wärmesperre vorsehbar. Somit wird die Wärme der Signalelektronik über die Luft im Innenbereich des Umrichters zu einem wesentlichen Anteil an den kühleren Gehäusedeckel 4, der nun viel größer ausgeführt ist als in der Figur 1 gezeigt. Somit ist die Wärme schnell an die Umgebung abführbar. Das Gehäuseteil 5 ist je nach Wandstärke im Grabenbereich auf einem etwas höheren Temperaturniveau und führt daher entsprechend weniger Wärme der Signalelektronik an die Umgebung ab.

Bei weiteren Ausführungsbeispielen wird der Umrichtermotor derart ausgeführt und betrieben, dass die Signalelektronik ein Temperaturniveau von bis zu 85°C aufweist, das Leistungsmodul ein Temperaturniveau von 120°C oder gar 140°C. Dabei ist der Motor derart ausgeführt, dass er bei Dauerbetrieb und maximal erlaubter Leistung ein Temperaturniveau von bis zu 155 °C erreichen würde. Er wird aber im Aussetzbetrieb oder bei Teillast derart betrieben, dass die von ihm erreichten Temperaturen unterhalb von 120°C liegen, vorzugsweise unter 100°C. Somit fließt die Wärme genügend schnell vom Leistungsmodul über den Dom 10 und ins Statorgehäuse und von dort an die Umgebung.

Selbst wenn also das Gehäuseteil 5 außerhalb des Grabens eine niedrigere Temperatur hat als das Statorgehäuse, wird der Wärmefluss aus dem Bereich des Doms zum größeren Teil ins Statorgehäuse und zum geringeren Teil ins restliche Gehäuseteil 5 geführt. Es ist also eine Quasi-Wärmeventilwirkung erreicht durch den Graben.

Wesentlich ist also bei dieser Variante, dass der Elektromotor ein hohes Drehmoment bewirken kann. Insbesondere ist der Elektromotor ein Servomotor, der nicht im Dauerbetrieb betrieben wird sondern im Aussetzbetrieb. In den jeweiligen Zeitspannen des Betriebs ist also die volle Leistung des Motors erzeugbar. In den zwischenliegenden Zeitspannen wird die Leistung reduziert oder Null. Auf diese Weise wird erreichbar, dass der Motor nicht sein maximal zulässiges Temperaturniveau erreicht sondern ein weit geringeres. Genau diese Erniedrigung wird bei der Erfindung genutzt, um Wärmeleistung der Leistungselektronik des Umrichters an die Umgebung über das Motorgehäuse, also insbesondere Statorgehäuse, abzuführen.

Bei weiteren Ausführungsbeispielen wird die Wandstärke im Bereich des Grabens auf sehr kleine Werte bis fast Null gebracht.

Bei weiteren nicht erfindungsgemäßen Ausführungsbeispielen wird die Wandstärke null erreicht, indem das Leistungsmodul direkt auf das Statorgehäuse kontaktiert wird oder über ein Zwischenstück, das sehr gut wärmeleitend ist. Dabei ist dann die mechanische Haltefunktion für das Leistungsmodul von der Leiterplatte ausgeführt. Dazu ist dann also eine Ausnehmung nicht nur innerhalb der Wärmesperre 6 sondern auch innerhalb des Gehäuseteiles 5 vorgesehen. Zum Ausfüllen dieser Ausnehmung ist dann das Leistungsmodul und/oder das Zwischenstück dicht verbunden mit dem Gehäuseteil 5, in dessen Ausnehmung das Leistungsmodul und/oder das Zwischenstück angeordnet ist oder sind. Bei weiteren erfindungsgemäßen Ausführungsbeispielen wird zusätzlich eine elastische Anpresskraft von der Leiterplatte als federndes Element ausgeführt, so dass das Leistungsmodul an das Statorgehäuse anpressbar wird und der Wärmekontakt somit verbesserbar wird. Insbesondere wird auch Wärmeleitpaste an die Schnittstelle eingebracht. In Weiterbildung kann die Federkraft auch von einem federnden Element bewirkt werden, wobei die Leiterplatte derart angeordnet ist, dass sie ein wenig auslenkbar ist und somit einen Freiheitsgrad zum Anpressen des Leistungsmoduls an das Statorgehäuse direkt oder über das Zwischenstück indirekt ermöglicht. Bei weiteren erfindungsgemäßen Ausführungsbeispielen ist die Federkraft durch ein zwischen der Leiterplatte und dem Gehäusedeckel eingebrachtes Teil aufbringbar.

Bei weiteren Ausführungsbeispielen sind die Leistungshalbleiter in liegender Weise in einer Ausnehmung der Leiterplatte vorgesehen und werden von einem Federelement, das zwischen Gehäusedeckel und Leistungshalbleiter angeordnet ist gegen das Statorgehäuse direkt oder über ein Zwischenstück indirekt gepresst. Zur Aufnahme von thermischen und mechanischen Spannungen weisen dabei die Anschlussfüßchen der Leistungshalbleiter eine einzige Sicke auf. Es sind aber auch mehrere Sicken pro Füßchen verwendbar. Die liegende Montage ermöglicht das Anwenden der SMD-Technik beim Bestücken. Dies bedeutet, dass die gesamte Signalelektronik und Leistungselektronik in einem Arbeitsgang bestückbar und dann lötbar ist. Die Anschlussfüßchen liegen dabei in einer Ebene und sind vorteiligerweise mindestens beidseitig aus dem Leistungshalbleiter herausgeführt.

Bei weiteren Ausführungsbeispielen weisen Gehäuseteile, also beispielsweise der Gehäusedeckel 4, das Gehäuseteil 5 und/oder das Statorgehäuse 1 Kühlvorrichtungen, wie Kühlrippen und oder Kühlfinger, auf zur Verbesserung des Wärmabtransportes an die Umgebung.

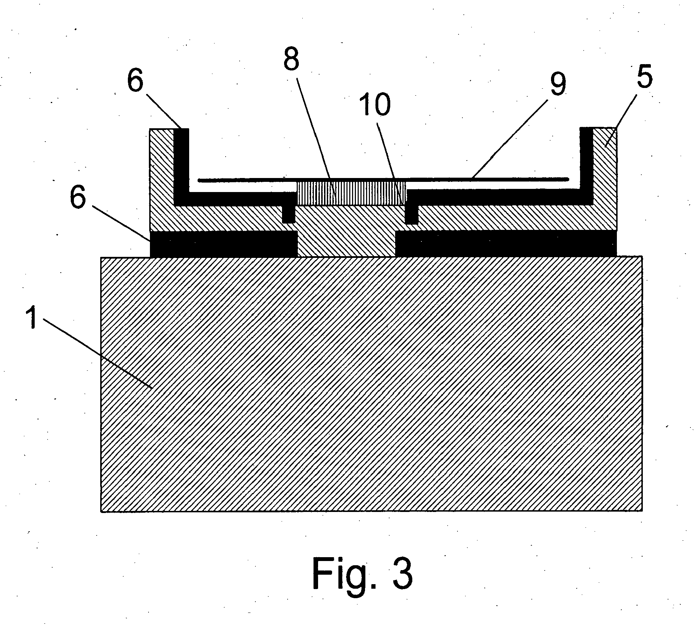

Bei einem weiteren Ausführungsbeispiel ist, wie in Figur 3 gezeigt, die Warmesperre 6, auch an der Innenseite des Gehäuseteils 5 ausgeführt. Somit wird der Wärmefluss vom Leistungsmodul 8 noch wirkungsvoller in Richtung auf das Motorgehäuse gelenkt und die Erwärmung den Innenraums zwischen Gehäuseteil 5 und Gehäusedeckel 4 ist begrenzbar oder zumindest verminderbar. Auch wenn der Motor wärmer ist als das Leistungsmodul ist der in den Innenraum einströmende Wärmestrom begrenzbar durch die an der Innenseite des Gehäuseteils 5 angebrachte Wärmesperre 6.

### Bezugszeichenliste

- 1: Statorgehäuse
- 2: Rotor
- 3: Lager
- 4: Gehäusedeckel
- 5: Gehäuseteil
- 6: Wärmesperre
- 7: Geberanbau
- 8: Leistungsmodul
- 9: Leiterplatte
- 10: Dom, von einem Graben umgeben

## Patentansprüche

1. Umrichtermotor, umfassend einen Elektromotor und einen diesen versorgenden Umrichter, welcher Signalelektronik und Leistungselektronik umfasst,
wobei der Umrichter zumindest ein gehäusebildendes Unterteil und zumindest ein darauf aufgesetztes gehäusebildendes Oberteil umfasst,
wobei der Elektromotor ein Motorgehäuse umfasst, insbesondere zumindest ein Statorgehäuse (1),
wobei die Leistungselektronik zum Motorgehäuse einen geringeren Wärmeübergangswiderstand aufweist als zum Oberteil und als zu mit der Umgebungsluft in Berührung stehenden Oberflächenbereichen des Unterteils,
wobei ein als Unterteil vorgesehenes Gehäuseteil (5) in direktem Kontakt mit dem Statorgehäuse (1) ist,
wobei am Unterteil eine ins Innere des Umrichters gerichtete, Erhöhung, ausgebildet ist, auf der die Leistungselektronik angeordnet ist,
wobei eine Warmesperre (6) vorgesehen ist, die zwischen dem Statorgehäuse (1) und Bereichen des Unterteils angeordnet ist,
wobei die Wärmesperre (6) eine Ausnehmung umfasst, durch welche Wärme der Leistungselektronik durchgeleitet wird,
**dadurch gekennzeichnet, daß** die Erhöhung als eine von einem Graben umgebene Erhöhung, also als Dom (10) ausgebildet ist.

2. Umrichtermotor nach Anspruch 1,
**dadurch gekennzeichnet, dass**
die Wärmesperre (6) auch oder nur an der Innenseite des Unterteils angeordnet ist, insbesondere zur Begrenzung des Einströmens von Wärme in den zwischen Unterteil und Oberteil gebildeten Innenraum.

3. Umrichtermotor nach Anspruch 1,
**dadurch gekennzeichnet, dass**
die Signalelektronik zum Oberteil einen geringeren Wärmeübergangswiderstand aufweist als zum Unterteil, insbesondere zu mit der Umgebungsluft in Berührung stehenden Oberflächenbereichen des Unterteils.

4. Umrichtermotor nach mindestens einem der vorangegangenen Ansprüche,
**dadurch gekennzeichnet, dass**
die Signalelektronik zum Oberteil einen geringeren Wärmeübergangswiderstand aufweist als zum Statorgehäuse (1).

5. Umrichtermotor nach mindestens einem der vorangegangenen Ansprüche,
**dadurch gekennzeichnet, dass**
die Signalelektronik und die Leistungselektronik auf derselben Leiterplatte (9) vorgesehen sind.

6. Umrichtermotor nach mindestens einem der vorangegangenen Ansprüche,
**dadurch gekennzeichnet, dass**
die Leistungselektronik zur Wärmeabfuhr mit dem Statorgehäuse (1) wärmeleitend verbunden ist, entweder direkt oder indirekt über ein Zwischenteil und/oder indirekt über das Unterteil.

7. Umrichtermotor nach mindestens einem der vorangegangenen Ansprüche,
**dadurch gekennzeichnet, dass**
zur Verringerung des Wärmetransportes ins Unterteil, insbesondere zu mit der Umgebungsluft in Berührung stehenden Oberflächenbereichen des Unterteils hin, die Wandstärke des Unterteils in mindestens einem Teilbereich verdünnt ausgeführt ist.

8. Umrichtermotor nach mindestens einem der vorangegangenen Ansprüche,
**dadurch gekennzeichnet, dass**
der Teilbereich um die Kontaktfläche der Leistungselektronik und des Unterteils herum angeordnet ist.

9. Umrichtermotor nach mindestens einem der vorangegangenen Ansprüche,
**dadurch gekennzeichnet, dass**
das Unterteil einen ins Innere des Umrichters gerichteten Dom (10) aufweist, an den die Leistungselektronik in Kontakt bringbar ist zur Wärmeabfuhr.

10. Umrichtermotor nach mindestens einem der vorangegangenen Ansprüche,
**dadurch gekennzeichnet, dass**
das Unterteil und/oder Oberteil aus Aluminium, insbesondere als Aluminium-Druckguss, gefertigt ist.

11. Umrichtermotor nach mindestens einem der vorangegangenen Ansprüche,
**dadurch gekennzeichnet, dass**
das Statorgehäuse (1) aus Stahlguss gefertigt ist.

12. Umrichtermotor nach mindestens einem der vorangegangenen Ansprüche,
**dadurch gekennzeichnet, dass**
bei Dauerbetrieb mit maximal zulässiger Leistung das Statorgehäuse (1) eine höhere Temperatur aufweist als die Leistungselektronik, insbesondere wobei dann keine Wärme von der Leistungselektronik über das Statorgehäuse (1) an die Umgebung abführbar ist.

13. Umrichtermotor nach mindestens einem der vorangegangenen Ansprüche,
**dadurch gekennzeichnet, dass**
der Elektromotor, insbesondere zur Ermöglichung der Wärmeabfuhr von der Leistungselektronik ans Statorgehäuse (1), derart in Teillast oder Aussetzbetrieb betreibbar ist, dass das Statorgehäuse (1) eine niedrigere Temperatur aufweist als die Leistungselektronik, insbesondere wobei dann Wärme von der Leistungselektronik über das Statorgehäuse (1) an die Umgebung abführbar ist.

## Claims

1. A converter motor, comprising an electric motor and a converter supplying it which comprises signal electronics and power electronics,
wherein the converter comprises at least one housing-forming lower part and at least one housing-forming upper part which is placed thereon,
wherein the electric motor comprises a motor housing, in particular at least one stator housing (1),
wherein the power electronics have a lesser heat transfer resistance relative to the motor housing than relative to the upper part and than relative to surface regions of the lower part which are in contact with the ambient air,
wherein a housing part (5) provided as the lower part is in direct contact with the stator housing (1),
wherein an elevation which is directed into the interior of the converter is formed on the lower part, on which elevation the power electronics are arranged,
wherein a thermal barrier (6) is provided which is arranged between the stator housing (1) and regions of the lower part,
wherein the thermal barrier (6) comprises a recess through which heat of the power electronics is passed,
**characterised in that** the elevation is formed as an elevation surrounded by a trough, i.e. as a dome (10).

2. A converter motor according to Claim 1, **characterised in that** the thermal barrier (6) is arranged also or only on the inner side of the lower part, in particular for limiting the inflow of heat into the inner space formed between the lower part and upper part.

3. A converter motor according to Claim 1, **characterised in that** the signal electronics have a lesser heat transfer resistance relative to the upper part than relative to the lower part, in particular relative to surface regions of the lower part which are in contact with the ambient air.

4. A converter motor according to at least one of the preceding claims, **characterised in that** the signal electronics have a lesser heat transfer resistance relative to the upper part than relative to the stator housing (1).

5. A converter motor according to at least one of the preceding claims, **characterised in that** the signal electronics and the power electronics are provided on the same printed circuit board (9).

6. A converter motor according to at least one of the preceding claims, **characterised in that** the power electronics, for dissipating heat, are connected in heat-conducting manner to the stator housing (1), either directly or indirectly via an intermediate part and/or indirectly via the lower part.

7. A converter motor according to at least one of the preceding claims, **characterised in that** in order to reduce the transport of heat into the lower part, in particular towards surface regions of the lower part which are in contact with the ambient air, the wall thickness of the lower part is made thinner in at least one partial region.

8. A converter motor according to at least one of the preceding claims, **characterised in that** the partial region is arranged around the contact face of the power electronics and of the lower part.

9. A converter motor according to at least one of the preceding claims, **characterised in that** the lower part has a dome (10) which is directed into the interior of the converter, with which dome the power electronics can be brought into contact for dissipating heat.

10. A converter motor according to at least one of the preceding claims, **characterised in that** the lower part and/or upper part is manufactured from aluminium, in particular as an aluminium diecasting.

11. A converter motor according to at least one of the preceding claims, **characterised in that** the stator housing (1) is manufactured from cast steel.

12. A converter motor according to at least one of the preceding claims, **characterised in that** in the case of continuous duty with the maximum permissible output the stator housing (1) has a higher temperature than the power electronics, in particular with then no heat being able to be dissipated to the surroundings from the power electronics via the stator housing (1).

13. A converter motor according to at least one of the preceding claims, **characterised in that** the electric motor, in particular for permitting the dissipation of heat from the power electronics to the stator housing (1), can be operated in partial load or at periodic duty such that the stator housing (1) has a lower temperature than the power electronics, in particular with then heat being able to be dissipated to the surroundings from the power electronics via the stator housing (1).

## Revendications

1. Moteur-convertisseur, comprenant un moteur électrique et un convertisseur qui alimente ce moteur et comprend un système électronique de signalisation et un système électronique de puissance,
sachant que le convertisseur comprend au moins une partie inférieure formant carter et au moins une partie supérieure formant carter et placée sur la partie inférieure,
sachant que le moteur électrique comprend un carter de moteur, notamment au moins un carter de stator (1),
sachant que le système électronique de puissance présente une résistance à la transmission de chaleur plus faible par rapport au carter de moteur que par rapport à la partie supérieure et aux régions de surface de la partie inférieure qui sont en contact avec l'air ambiant,
sachant qu'une partie de carter (5) prévue comme partie inférieure est en contact direct avec le carter de stator (1),
sachant qu'un rehaussement, dirigé à l'intérieur du convertisseur et sur lequel est disposé le système électronique de puissance, est formé sur la partie inférieure,
sachant qu'il est prévu une barrière thermique (6), qui est disposée entre le carter de stator (1) et des régions de la partie inférieure,
sachant que la barrière thermique (6) comprend un évidement à travers lequel est dirigée la chaleur du système électronique de puissance,
**caractérisé en ce que** le rehaussement est réalisé sous la forme d'un rehaussement entouré par une tranchée, donc sous forme de dôme (10).

2. Moteur-convertisseur selon la revendication 1, **caractérisé en ce que** la barrière thermique (6) est disposée également ou uniquement sur le côté intérieur de la partie inférieure, en particulier afin de limiter l'afflux de chaleur dans l'espace intérieur formé entre la partie inférieure et la partie supérieure.

3. Moteur-convertisseur selon la revendication 1, **caractérisé en ce que** le système électronique de signalisation présente une résistance à la transmission de chaleur plus faible par rapport à la partie supérieure que par rapport à la partie inférieure, notamment par rapport aux régions de surface de la partie inférieure qui sont en contact avec l'air ambiant.

4. Moteur-convertisseur selon au moins une des revendications précédentes, **caractérisé en ce que** le système électronique de signalisation présente une résistance à la transmission de chaleur plus faible par rapport à la partie supérieure que par rapport au carter de stator (1).

5. Moteur-convertisseur selon au moins une des revendications précédentes, **caractérisé en ce que** le système électronique de signalisation et le système électronique de puissance sont prévus sur la même carte imprimée (9).

6. Moteur-convertisseur selon au moins une des revendications précédentes, **caractérisé en ce qu'**aux fins d'évacuation de chaleur, le système électronique de puissance est relié en conduction thermique au carter de stator (1) soit directement soit indirectement via un élément intermédiaire et/ou indirectement via la partie inférieure.

7. Moteur-convertisseur selon au moins une des revendications précédentes, **caractérisé en ce que**, afin de réduire le transfert de chaleur dans la partie inférieure, en particulier vers les régions de surface de la partie inférieure qui sont en contact avec l'air ambiant, l'épaisseur de paroi de la partie inférieure est réalisée amincie dans au moins une région partielle.

8. Moteur-convertisseur selon au moins une des revendications précédentes, **caractérisé en ce que** la région partielle est disposée tout autour de la surface de contact du système électronique de puissance et de la partie inférieure.

9. Moteur-convertisseur selon au moins une des revendications précédentes, **caractérisé en ce que** la partie inférieure présente un dôme (10) dirigé à l'intérieur du convertisseur et contre lequel le système électronique de puissance peut être amené en contact aux fins d'évacuation de chaleur.

10. Moteur-convertisseur selon au moins une des revendications précédentes, **caractérisé en ce que** la partie inférieure et/ou la partie supérieure sont fabriquées en aluminium, en particulier en aluminium moulé sous pression.

11. Moteur-convertisseur selon au moins une des revendications précédentes, **caractérisé en ce que** le carter de stator (1) est fabriqué en acier moulé.

12. Moteur-convertisseur selon au moins une des revendications précédentes, **caractérisé en ce que**, en service continu à la puissance maximale admissible, le carter de stator (1) présente une plus haute température que le système électronique de puissance, sachant notamment que la chaleur du système électronique de puissance ne peut alors pas être évacuée dans l'environnement via le carter de stator (1).

13. Moteur-convertisseur selon au moins une des revendications précédentes, **caractérisé en ce que** le moteur électrique, notamment pour permettre d'évacuer la chaleur du système électronique de puissance vers le carter de stator (1), peut être exploité en charge partielle ou en service discontinu de telle sorte que le carter de stator (1) présente une plus basse température que le système électronique de puissance, sachant notamment que la chaleur du système électronique de puissance peut alors être évacuée dans l'environnement via le carter de stator (1).
